# EUROPEAN PATENT SPECIFICATION

(11) **EP 3 456 692 B1**
(45) Date of publication and mention of the grant of the patent: **30.12.2020**
(21) Application number: 16901581.5
(22) Date of filing: 10.05.2016
(51) Int. Cl.: C03C 10/02, C03B 32/02, C03C 3/21, C03C 4/14, H01B 13/00, H01M 10/0562, C03C 23/00, C01B 25/45

(54) **METHOD FOR PRODUCING LTP OR LATP CRYSTAL PARTICLE**
VERFAHREN ZUR HERSTELLUNG VON LTP- ODER LATP-KRISTALLPARTIKELN
PROCÉDÉ DE PRODUCTION DE PARTICULES CRISTALLINES DE LTP OU DE LATP

(43) Date of publication of application: 20.03.2019
(73) Proprietor: Sumita Optical Glass, Inc., Saitama-shi 330-8565 (JP)
(72) Inventor: TEZUKA, Tatsuya, Saitama-shi Saitama 330-8565 (JP); ANZAI, Dai, Saitama-shi Saitama 330-8565 (JP)
(74) Representative: Hamer, Christopher K.
(86) International application number: PCT/JP2016/002299
(87) International publication number: WO 2017/195232

(56) References cited:
- JP-A- H05 139 781
- JP-A- 2011 241 138
- JP-A- 2013 199 386
- JP-A- 2013 237 578
- JP-A- 2014 094 879

## Description

### TECHNICAL FIELD

The present disclosure relates to a method of producing a LTP or LATP crystal particle that has reduced impurity contamination, high crystallinity, and excellent dispersibility.

### BACKGROUND

A lithium-based composite oxide crystal with a nasicon-type crystal structure shows promise as a solid electrolyte material of a lithium ion battery due to its chemical stability and high lithium ion conductivity at room temperature. To achieve high battery performance, impurity reduction, high crystallization, and microparticulation are required for the solid electrolyte material.

In this regard, a lithium-based composite oxide crystal represented by Formula (I) ${Li}_{1 + x} {Al}_{x} {Ti}_{2 - x} {\left({PO}_{4}\right)}_{3} \left(0\leq x\leq 1.0\right)$ (1) (hereinafter, the above crystal is called the "LTP or LATP crystal", where, when x = 0 in the above Formula (I), the crystal is an LTP crystal, and when 0 < x ≤ 1.0 in the above Formula (I), the crystal is a LATP crystal) has chemical stability and high lithium ion conductivity, which are required for the solid electrolyte material, and is free of a rare element and relatively easy to produce. Accordingly, the LTP or LATP crystal, among other lithium-based composite oxide crystals, holds great promise as the aforementioned solid electrolyte material. Thus, impurity reduction, high crystallization, and microparticulation are strongly desired especially for the LTP or LATP crystal.

At present, the solid-phase method, sol-gel method, and vitrification method are generally used as a method of producing the LTP or LATP crystal, and any of these methods involves milling for microparticulation. Milling might pose problems, such as impurity contamination and strain occurring in the crystal structure, which might be a cause of a decrease in lithium ion conductivity. Furthermore, since a high-level milling technique is required for sharpening particle size distribution, a microparticulation technique which does not involve milling is sought for.

Therefore, there has been proposed a method of producing a porous body of LTP or LATP crystals, the method including vitrification of a plurality of oxides, as materials of the LTP or LATP crystals, together with Ca₃(PO₄)₂, followed by thermal treatment and acid treatment of glass resulting from the vitrification (refer to Patent Literature 1).

### CITATION LIST

### Patent Literature

PTL 1: Japanese Patent No. 2656415

### SUMMARY

### (Technical Problem)

However, the porous body of the LTP or LATP crystals produced by the production method described in Patent Literature 1 contains a large amount of Ca as an impurity, has low crystallinity, and moreover, requires milling to obtain crystal particles with excellent dispersibility.

The present disclosure has been conceived in view of the above respect, and the present disclosure is to provide a method of producing a LTP or LATP crystal particle that has reduced impurity contamination, high crystallinity, and excellent dispersibility.

### (Solution to Problem)

The present inventors have conducted earnest studies on the above problem and found that a LTP or LATP crystal particle that has reduced impurity contamination, high crystallinity, and excellent dispersibility is obtained without the need for milling, by forming glass containing, in molar ratio, 1 + x of Li₂O, x of Al₂O₃, 4 - 2x of TiO₂ (0 ≤ x ≤ 1), 3 + y of P₂O₅, and from more than y to less than 3y of ZnO (1 ≤ y ≤ 4), and, after that, by subjecting the glass to thermal treatment for crystallization, and by selectively eluting a substance other than a LTP or LATP crystal through acid treatment. Thus, the present inventors have completed the present disclosure.

That is to say, some of modes for solving the above problem are as follows.
1. A method of producing a LTP or LATP crystal particle, the method including:
   preparing glass containing,
   in molar ratio,
   1 + x of Li₂O, where 0 ≤ x ≤ 1,
   x of Al₂O₃,
   4 - 2x of TiO₂,
   3 + y of P₂O₅, where 1 ≤ y ≤ 4, and
   from more than y to less than 3y of ZnO;
   subjecting, after the preparation of glass, the glass to thermal treatment for crystallization; and
   selectively eluting a substance other than a LTP or LATP crystal through acid treatment.
2. The method of producing according to 1, wherein
   the molar ratio of ZnO, in materials of the glass, ranges from more than y to 2y or less.

### (Advantageous Effect)

The present disclosure makes it possible to produce a LTP or LATP crystal particle that has reduced impurity contamination, high crystallinity, and excellent dispersibility.

### BRIEF DESCRIPTION OF THE DRAWINGS

In the accompanying drawings:
FIG. 1 illustrates an X-ray diffraction pattern of crystallized glass in a process of preparing a LATP crystal particle of Example 1;
FIG. 2 illustrates an X-ray diffraction pattern of crystallized glass in a process of preparing a LATP crystal particle of Example 2;
FIG. 3 illustrates an X-ray diffraction pattern of crystallized glass in a process of preparing a LATP crystal particle of Example 3;
FIG. 4 illustrates an X-ray diffraction pattern of crystallized glass in a process of preparing a LATP crystal particle of Comparative Example 1;
FIG. 5 illustrates an X-ray diffraction pattern of crystallized glass in a process of preparing a LATP crystal particle of Comparative Example 2;
FIG. 6 illustrates an X-ray diffraction pattern of crystallized glass in a process of preparing a LATP crystal particle of Comparative Example 3;
FIG. 7 illustrates an X-ray diffraction pattern of a LATP crystal particle of Example 1;
FIG. 8 illustrates an X-ray diffraction pattern of a LATP crystal particle of Example 2;
FIG. 9 illustrates an X-ray diffraction pattern of a LATP crystal particle of Example 3;
FIG. 10 illustrates an X-ray diffraction pattern of a LATP crystal particle of Comparative Example 1;
FIG. 11 illustrates an X-ray diffraction pattern of a LATP crystal particle of Comparative Example 2;
FIG. 12 illustrates an X-ray diffraction pattern of a LATP crystal particle of Comparative Example 3;
FIG. 13 illustrates a backscattered electron image of a LATP crystal particle of Example 1;
FIG. 14 illustrates a backscattered electron image of a LATP crystal particle of Example 2;
FIG. 15 illustrates a backscattered electron image of a LATP crystal particle of Example 3;
FIG. 16 illustrates a backscattered electron image of a LATP crystal particle of Comparative Example 1;
FIG. 17 illustrates a backscattered electron image of a LATP crystal particle of Comparative Example 2;
FIG. 18 illustrates a backscattered electron image of a LATP crystal particle of Comparative Example 3;
FIG. 19 illustrates an EDS spectrum of a LATP crystal particle of Example 1;
FIG. 20 illustrates an EDS spectrum of a LATP crystal particle of Example 2;
FIG. 21 illustrates an EDS spectrum of a LATP crystal particle of Example 3;
FIG. 22 illustrates an EDS spectrum of a LATP crystal particle of Comparative Example 1;
FIG. 23 illustrates an EDS spectrum of a LATP crystal particle of Comparative Example 2; and
FIG. 24 illustrates an EDS spectrum of a LATP crystal particle of Comparative Example 3.

### DETAILED DESCRIPTION

A description is given in detail below of a method of producing a LTP or LATP crystal particle according to one of embodiments of the present disclosure.

The method of producing a LTP or LATP crystal particle according to the present embodiment uses respective materials, such as oxide, hydroxide, carbonate, nitrate, and phosphate, that, when vitrified, correspond to components given as Li₂O, Al₂O₃, TiO₂, P₂O₅, and ZnO.

### <Li₂O>

Li₂O is a component that constitutes a LTP or LATP crystal, and the molar ratio of Li₂O, when vitrified, is 1 + x. Due to the relation with Al₂O₃ and TiO₂, x ranges from 0 to 1 inclusive. When x is more than 1, the LATP crystal structure may collapse. Preferably, x is 0.8 or less. More preferably, x is 0.6 or less. As materials of the Li₂O component, phosphate, such as LiPO₃, and carbonate, such as Li₂CO₃, are used, for example.

### <Al₂O₃>

Al₂O₃ is a component that constitutes a LATP crystal, and the molar ratio of Al₂O₃, when vitrified, is x. As materials of the Al₂O₃ component, phosphate, such as Al(PO₃)₃, and hydroxide, such as Al(OH)₃, are used, for example.

### <TiO₂>

TiO₂ is a component that constitutes a LTP or LATP crystal, and the molar ratio of TiO₂, when vitrified, is 4 - 2x. As materials of the TiO₂ component, phosphate, such as TiP₂O₇, and oxide, such as TiO₂, are used, for example.

### <P₂O₅>

P₂O₅ is a component that constitutes a LTP or LATP crystal and that also constitutes zinc pyrophosphate, which is precipitated during thermal treatment performed after vitrification. The molar ratio of P₂O₅, when vitrified, is 3 + y. Due to the relation with Li₂O, Al₂O₃, and TiO₂, y ranges from 1 to 4 inclusive. When y is less than 1, vitrification is difficult. When y is more than 4, glass loses stability, and precipitation of a crystal through thermal treatment, performed after vitrification, is difficult. Preferably, y ranges from 1.5 to 3.5 inclusive. More preferably, y ranges from 2 to 3 inclusive. As materials of the P₂O₅ component, the aforementioned phosphate, acid, such as H₃PO₄, and oxide, such as P₂O₅, are used, for example.

### <ZnO>

ZnO is a component that constitutes zinc pyrophosphate, which is precipitated during thermal treatment performed after vitrification, and the molar ratio of ZnO, when vitrified, ranges from more than y to less than 3y. When the molar ratio of ZnO is y or less, in addition to a LTP or LATP crystal, a titanium pyrophosphate crystal, which is not eluted by acid, may be precipitated during thermal treatment performed after vitrification. When the molar ratio of ZnO is 3y or more, although a zinc phosphate crystal and a zinc pyrophosphate crystal, which may be eluted by acid, are precipitated during thermal treatment performed after vitrification, Zn may be partially introduced into a LTP or LATP crystal and remain as an impurity. Preferably, the molar ratio of ZnO ranges from more than y to 2y or less. By setting the molar ratio of ZnO to be 2y or less, a sub-phase other than a zinc pyrophosphate crystal is reduced at the stage of crystallized glass, and impurities are less likely to remain in a LTP or LATP crystal particle. As materials of the ZnO component, phosphate, such as Zn(PO₃)₂, and oxide, such as ZnO, are used, for example.

### <Preparation of Glass>

As glass materials, oxide, hydroxide, carbonate, nitrate, phosphate, or the like, which are the materials corresponding to the components, are weighed according to predetermined percentages and mixed fully. Subsequently, the mixed materials are introduced into, for example, a platinum crucible that is not reactive the glass materials and others, are stirred timely while melt by heating the materials to from 1200 to 1500 °C in an electric furnace, and after that, are clarified and homogenized in the electric furnace. Then, the melt is poured into a tank filled with sufficient water and granulated and rapidly cooled. Thus, glass is prepared.

### <Thermal Treatment>

Subsequently, the prepared glass is subject to thermal treatment in two steps each conducted for from 10 to 30 hours, with first step at from 400 to 600 °C and the second step at from 700 to 900 °C. The thermal treatment is conducted to obtain crystallized glass inside which a LTP or LATP crystal particle and mainly a zinc pyrophosphate crystal as an eluted phase are precipitated, and after acid treatment which is described below, a LTP or LATP crystal particle having a diameter of from 0.1 to 10 µm is obtained.

### <Acid Treatment>

Furthermore, the obtained crystallized glass is subject to acid treatment by immersing the crystallized glass in 1 to 5N nitric acid or 1 to 5N hydrochloric acid at from 30 to 90 °C for 3 to 24 hours. During the immersion, stirring with a stirrer or the like is preferably conducted. By the acid treatment, an eluted phase, other than a LTP or LATP crystal, that is mainly composed of a zinc pyrophosphate crystal is eluted. After the acid treatment, a LTP or LATP crystal is separated from an acid solution with use of a filter paper or the like, and thus, a LTP or LATP crystal particle having a diameter of from 0.1 to 10 µm is obtained.

According to the method of manufacturing a LTP or LATP crystal particle of the present embodiment configured as above, since mainly the zinc pyrophosphate crystal is precipitated as the eluted phase at the time of vitrification, solubility of the eluted phase with respect to acid is higher than before, and this prevents residual components to be eluted in the acid treatment. Accordingly, impurity contamination is reduced, and manufacturing of a LTP or LATP crystal particle having high crystallinity and excellent dispersibility is allowed.

Furthermore, according to the method of manufacturing a LTP or LATP crystal particle of the present embodiment, when the molar ratio of ZnO in the glass materials ranges from more than y to 2y or less, impurities are even less likely to remain in a LTP or LATP crystal particle.

### EXAMPLES

A description is given below of a method of manufacturing a LTP or LATP crystal particle according to the present disclosure with reference to Examples and Comparative Examples. However, the present disclosure is not limited to these Examples.

### <Example 1>

By using LiPO₃, Al(PO₃)₃, Zn(PO₃)₂, TiO₂, and ZnO as materials, glass composed, in molar ratio, of 1.2 of Li₂O, 0.2 of Al₂O₃, 3.6 of TiO₂, 6 of P₂O₅, and 6 of ZnO was prepared. That is to say, glass according to the above embodiment in which x = 0.2, y = 3, and ZnO was 2y in molar ratio was prepared. Subsequently, the prepared glass was subject to thermal treatment in two steps, the first step at 520 °C for 20 hours and the second step at 850 °C for 20 hours, and thus, crystallized glass was obtained. The crystallized glass was subject to acid treatment by immersing the crystallized glass in 5N nitric acid at 60 °C for 12 hours, and subsequently, particles were collected by filtering to obtain LATP crystal particles of Example 1.

### <Example 2>

By using LiPO₃, Al(PO₃)₃, Zn(PO₃)₂, TiO₂, and ZnO as materials, glass composed, in molar ratio, of 1.3 of Li₂O, 0.3 of Al₂O₃, 3.4 of TiO₂, 5 of P₂O₅, and 4 of ZnO was prepared. That is to say, glass according to the above embodiment in which x = 0.3, y = 2, and ZnO was 2y in molar ratio was prepared. Subsequently, the prepared glass was subject to thermal treatment in two steps, the first step at 480 °C for 20 hours and the second step at 820 °C for 20 hours, and thus, crystallized glass was obtained. The crystallized glass was subject to acid treatment by immersing the crystallized glass in 3N hydrochloric acid at 60 °C for 12 hours, and subsequently, particles were collected by filtering to obtain LATP crystal particles of Example 2.

### <Example 3>

By using LiPO₃, Al(PO₃)₃, Zn(PO₃)₂, TiO₂, and ZnO as materials, glass composed, in molar ratio, of 1.4 of Li₂O, 0.4 of Al₂O₃, 3.2 of TiO₂, 6 of P₂O₅, and 7 of ZnO was prepared. That is to say, glass according to the above embodiment in which x = 0.4, y = 3, and ZnO was 2.3y in molar ratio was prepared. Subsequently, the prepared glass was subject to thermal treatment in two steps, the first step at 470 °C for 20 hours and the second step at 790 °C for 20 hours, and thus, crystallized glass was obtained. The crystallized glass was subject to acid treatment by immersing the crystallized glass in 3N hydrochloric acid at 60 °C for 12 hours, and subsequently, particles were collected by filtering to obtain LATP crystal particles of Example 3.

### <Comparative Example 1>

By using LiPO₃, Al(PO₃)₃, Ca(PO₃)₂, TiO₂, and CaCO₃ as materials, glass composed, in molar ratio, of 1.3 of Li₂O, 0.3 of Al₂O₃, 3.4 of TiO₂, 5.2 of P₂O₅, and 6.6 of CaO was prepared. Subsequently, the prepared glass was subject to thermal treatment in two steps, the first step at 580 °C for 20 hours and the second step at 700 °C for 12 hours, and thus, crystallized glass was obtained. The crystallized glass was subject to acid treatment by immersing the crystallized glass in 5N nitric acid at 60 °C for 12 hours, and subsequently, filtering was conducted to obtain a porous body. The obtained porous body was milled in a ball mill for 12 hours, and LATP crystal particles of Comparative Example 1 were obtained.

### <Comparative Example 2>

By using LiPO₃, Al(PO₃)₃, Zn(PO₃)₂, TiO₂, and ZnO as materials, glass composed, in molar ratio, of 1.4 of Li₂O, 0.4 of Al₂O₃, 3.2 of TiO₂, 6 of P₂O₅, and 9 of ZnO was prepared. That is to say, glass according to the above embodiment in which x = 0.4, y = 3, and ZnO was 3y in molar ratio was prepared. Subsequently, the prepared glass was subject to thermal treatment in two steps, the first step at 460 °C for 20 hours and the second step at 810 °C for 20 hours, and thus, crystallized glass was obtained. The crystallized glass was subject to acid treatment by immersing the crystallized glass in 5N nitric acid at 60 °C for 12 hours, and subsequently, particles were collected by filtering to obtain LATP crystal particles of Comparative Example 2.

### <Comparative Example 3>

By using LiPO₃, Al(PO₃)₃, Zn(PO₃)₂, TiP₂O₇, and TiO₂ as materials, glass composed, in molar ratio, of 1.4 of Li₂O, 0.4 of Al₂O₃, 3.2 of TiO₂, 6 of P₂O₅, and 3 of ZnO was prepared. That is to say, glass according to the above embodiment in which x = 0.4, y = 3, and ZnO was y in molar ratio was prepared. Subsequently, the prepared glass was subject to thermal treatment in two steps, the first step at 440 °C for 20 hours and the second step at 790 °C for 20 hours, and thus, crystallized glass was obtained. The crystallized glass was subject to acid treatment by immersing the crystallized glass in 5N nitric acid at 60 °C for 12 hours, and subsequently, particles were collected by filtering to obtain LATP crystal particles of Comparative Example 3.

### <Comparative Example 4>

By using LiPO₃, Al(PO₃)₃, Zn(PO₃)₂, TiO₂, and ZnO as materials, glass composed, in molar ratio, of 1.2 of Li₂O, 0.2 of Al₂O₃, 3.6 of TiO₂, 8 of P₂O₅, and 12 of ZnO was prepared. That is to say, glass according to the above embodiment in which x = 0.2, y = 5, and ZnO was 2.4y in molar ratio was prepared. Although the prepared glass was subject to thermal treatment at a melting point or less, no crystal was precipitated.

### <Comparative Example 5>

By using LiPO₃, Al(PO₃)₃, Zn(PO₃)₂, TiP₂O₇, and TiO₂ as materials, a melt composed, in molar ratio, of 1.1 of Li₂O, 0.1 of Al₂O₃, 3.8 of TiO₂, 3.5 of P₂O₅, and 1 of ZnO was prepared. Although granulated and rapidly cooled, the prepared melt was not vitrified. That is to say, with the molar ratio of x = 0.1, y = 0.5, and ZnO was 2y in the above embodiment, glass was not prepared.

### <X-Ray Diffraction Spectra of Crystallized Glass>

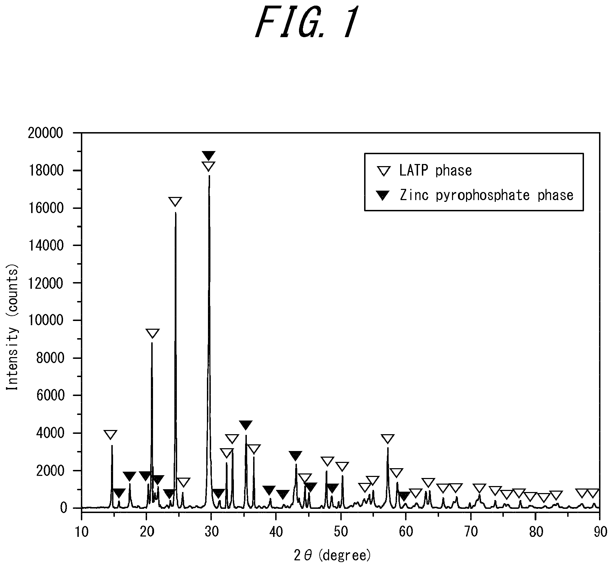

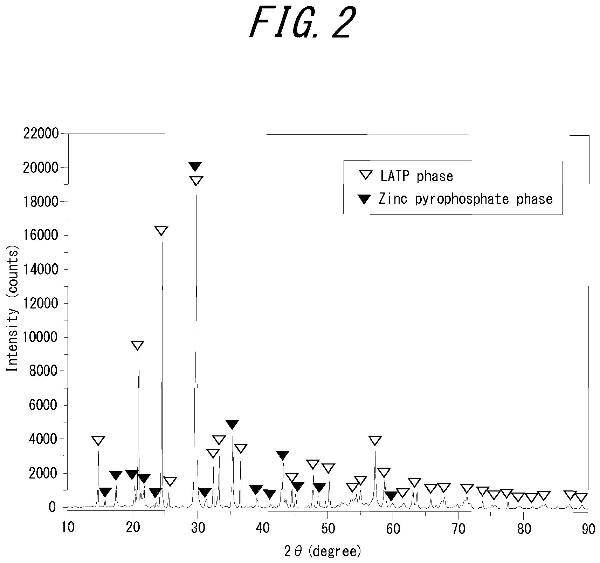

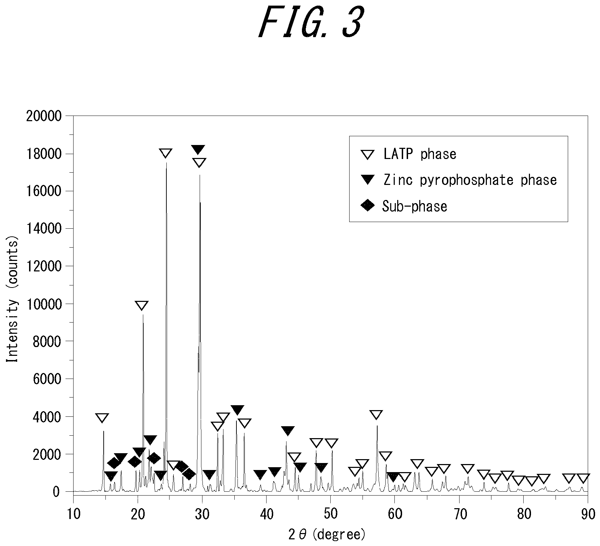

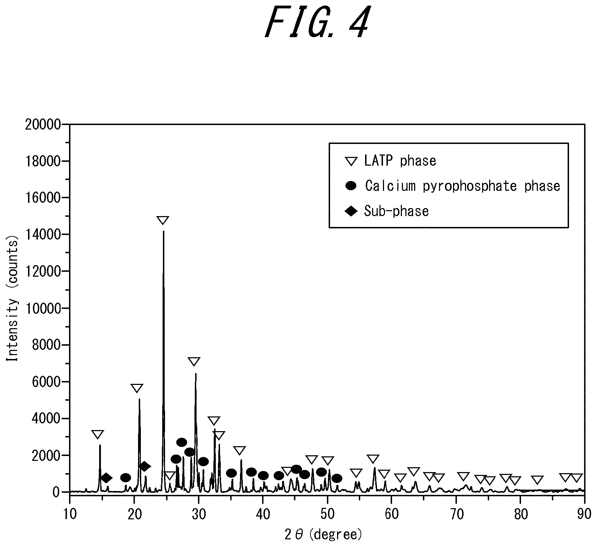

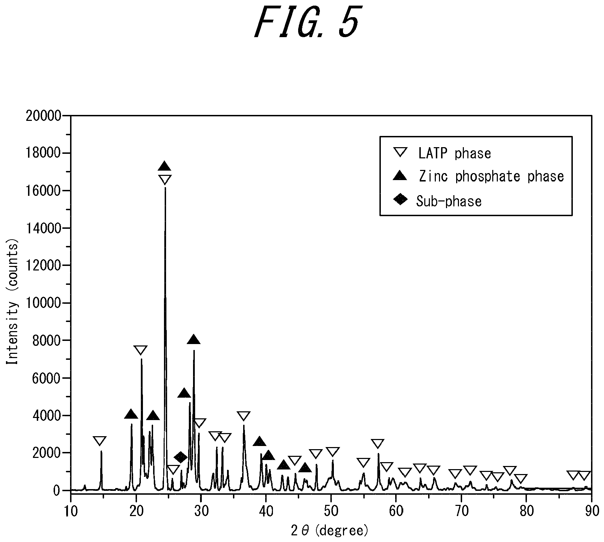

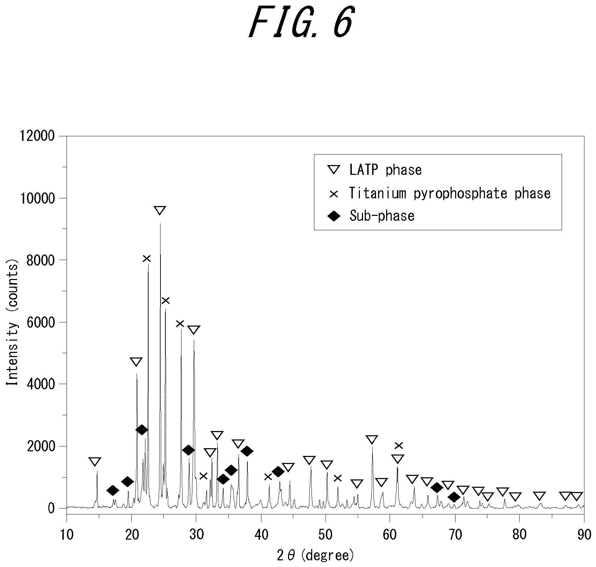

By using an X-ray diffractometer Ultima IV (manufactured by Rigaku Co., Ltd.), X-ray diffraction spectra of crystallized glass in the process of preparing the LATP crystal particles of Examples 1 to 3 and Comparative Examples 1 to 3 were measured. FIGs. 1 to 3 and FIGs. 4 to 6 respectively illustrate the X-ray diffraction spectra of Examples 1 to 3 and Comparative Examples 1 to 3. As illustrated in FIGs. 1 and 2, it has been found that LATP crystals and zinc pyrophosphate crystals are precipitated in Examples 1 and 2. As illustrated in FIG. 3, it has been found that LATP crystals, zinc pyrophosphate crystals, and partially, sub-phases are precipitated in Example 3. As illustrated in FIG. 4, it has been found that LATP crystals, calcium phosphate crystals, and sub-phases are precipitated in Comparative Example 1. As illustrated in FIG. 5, it has been found that LATP crystals, zinc phosphate crystals, and sub-phases are precipitated in Comparative Example 2. As illustrated in FIG. 6, it has been found that LATP crystals, titanium pyrophosphate crystals, and sub-phases are precipitated in Comparative Example 3.

### <X-Ray Diffraction Spectra of LATP Crystal Particles>

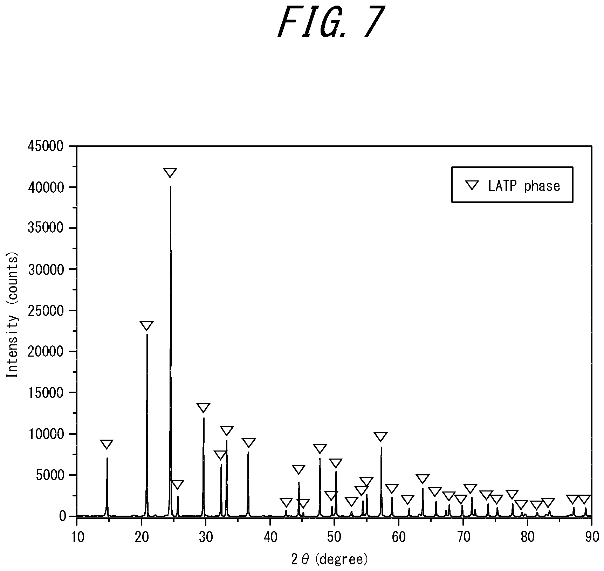

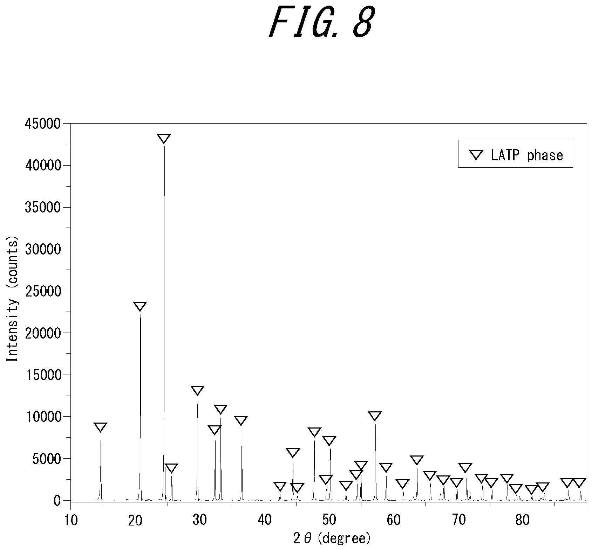

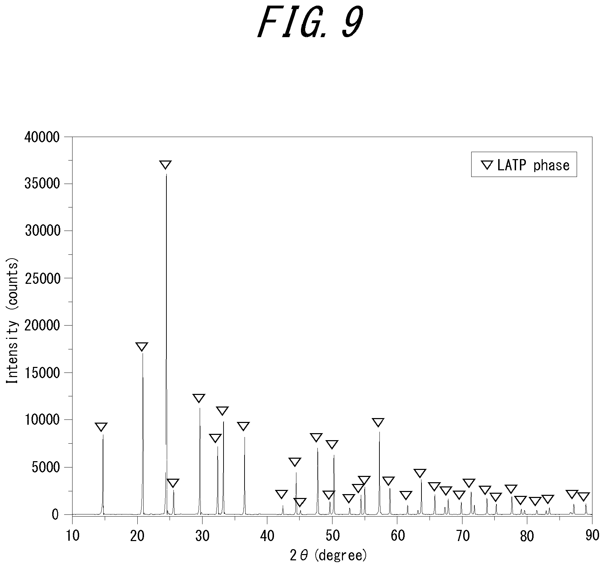

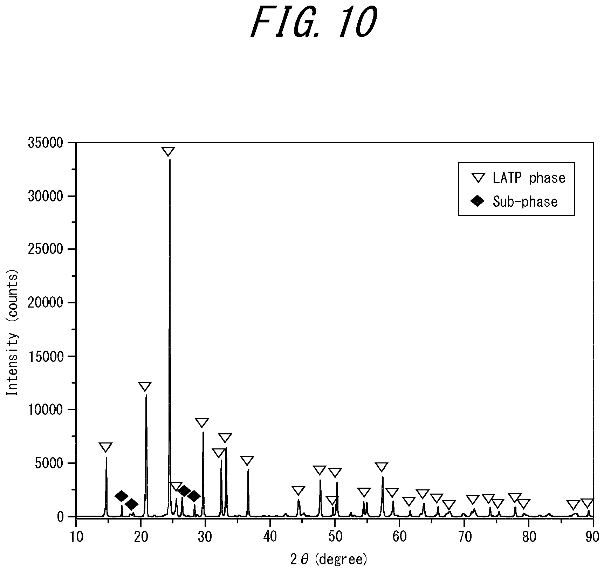

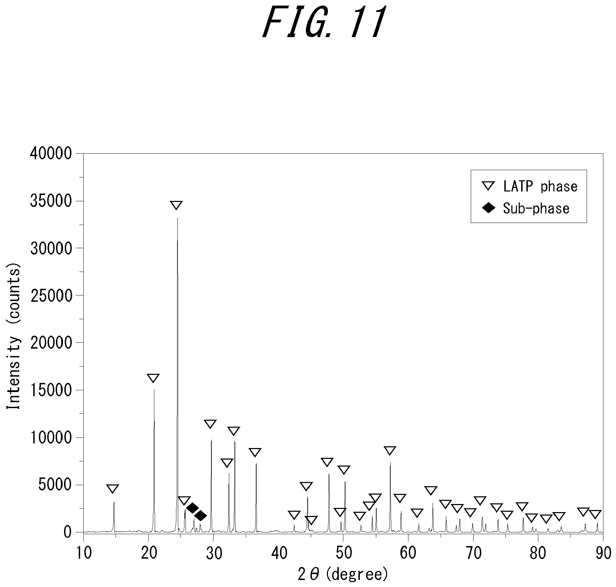

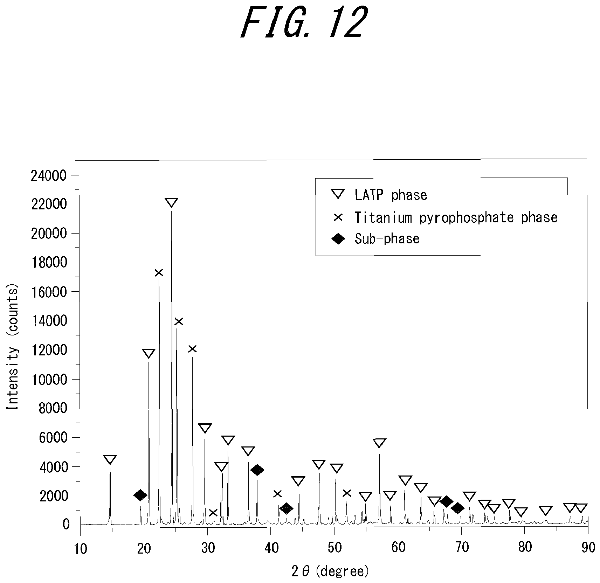

By using the X-ray diffractometer Ultima IV (manufactured by Rigaku Co., Ltd.), X-ray diffraction spectra of LATP crystal particles of Examples 1 to 3 and Comparative Examples 1 to 3 were measured. FIGs. 7 to 9 and FIGs. 10 to 12 respectively illustrate the X-ray diffraction spectra of Examples 1 to 3 and Comparative Examples 1 to 3. As illustrated in FIGs. 7 to 9, it has been found that the LATP crystal particles of Examples 1 to 3 are single-phase LATP crystals. As illustrated in FIGs. 10 and 11, it has been found that sub-phase peaks are observed in the LATP crystal particles of Comparative Examples 1 and 2 and that these LATP crystal particles are not single-phase LATP crystals. As illustrated in FIG. 12, it has been found that a titanium pyrophosphate peak and a sub-phase peak are observed in the LATP crystal particles of Comparative Example 3 and that these LATP crystal particles are not single-phase LATP crystals.

### <Backscattered Electron Images of LATP Crystal Particles>

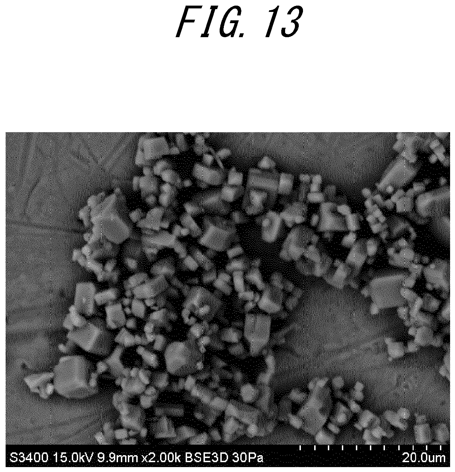

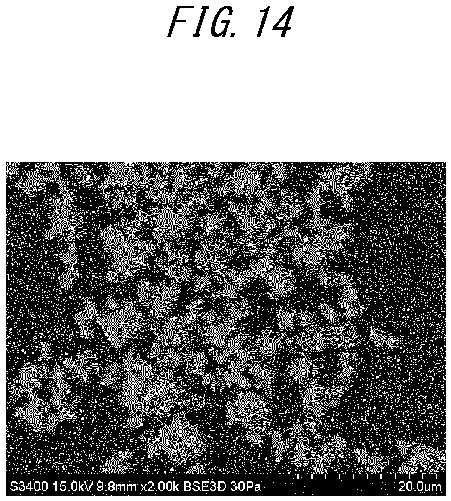

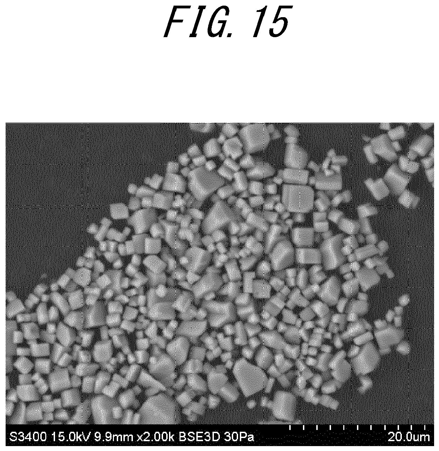

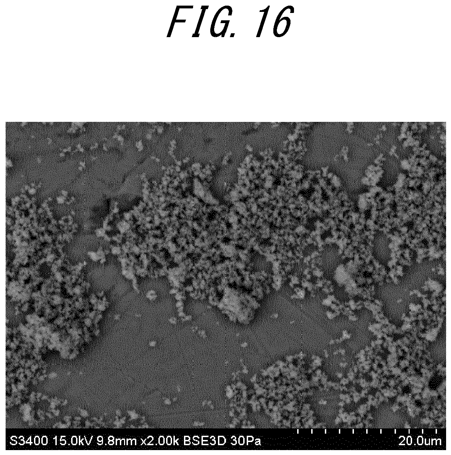

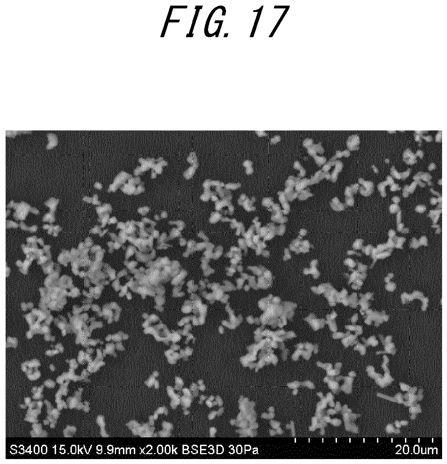

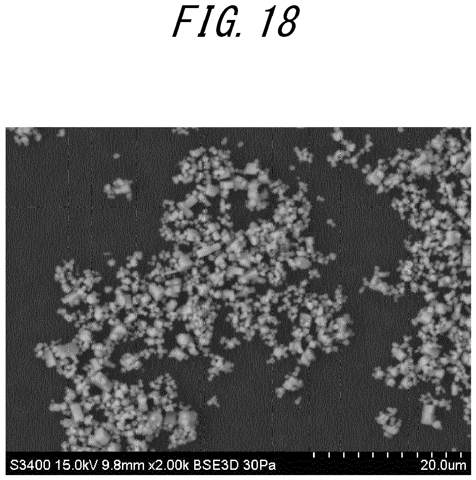

By using a scanning electron microscope S-3400N (manufactured by Hitachi High Technologies Co., Ltd.), backscattered electron images of the LATP crystal particles of Examples 1 to 3 and Comparative Examples 1 to 3 were studied. FIGs. 13 to 15 and FIGs. 16 to 18 respectively illustrate the backscattered electron images of Examples 1 to 3 and Comparative Examples 1 to 3. As illustrated in FIGs. 13 to 15, the LATP crystal particles of Examples 1 to 3 have a quadrangular prism-like shape having high crystallinity, with no agglomeration observed. As illustrated in FIG. 16, the LATP crystal particles of Comparative Example 1 have a shape having no sharp edges and having low crystallinity, with partial agglomeration observed. As illustrated in FIG. 17, the LATP crystal particles of Comparative Example 2 are observed to have a shape having no sharp edges and having low crystallinity. As illustrated in FIG. 18, the LATP crystal particles of Comparative Example 3 are generally observed to have a shape having no sharp edges and having low crystallinity, although partially observed to have a shape having high crystallinity.

### <EDS Spectra of LATP Crystal Particles>

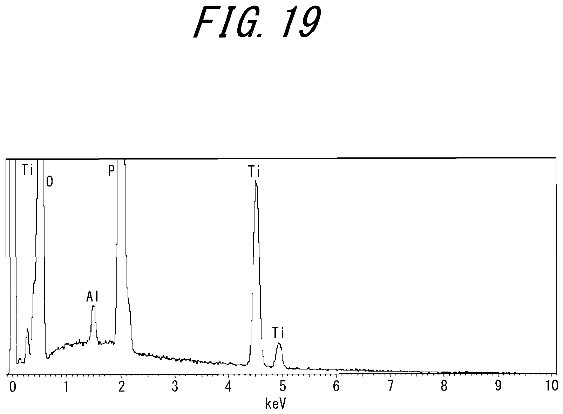

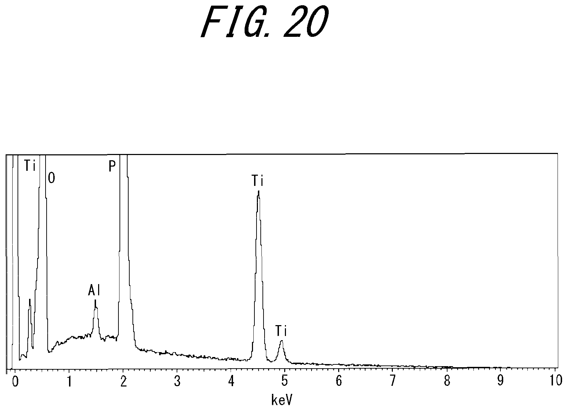

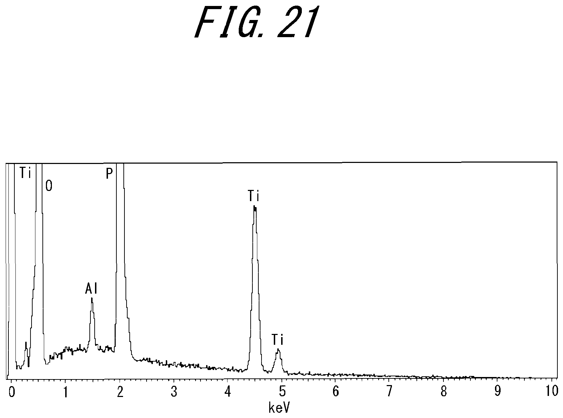

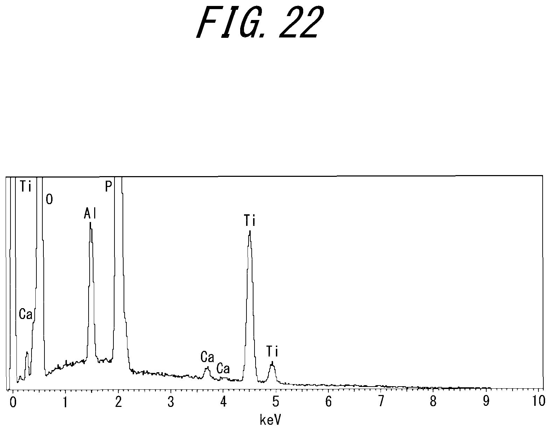

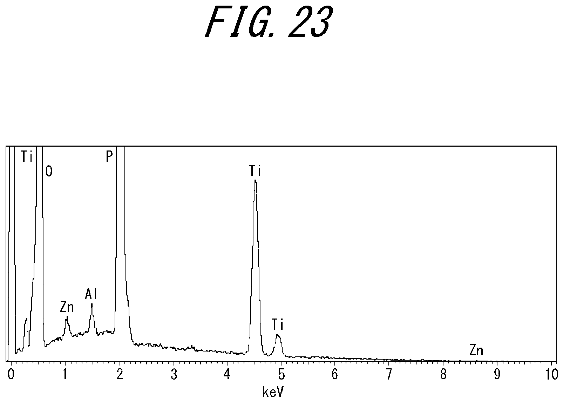

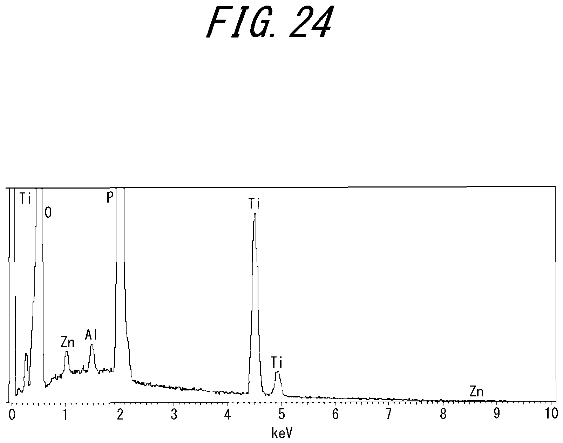

By using an energy-dispersive X-ray analysis device INCA Energy manufactured by Oxford Instruments Plc.), EDS spectra of the LATP crystal particles of Examples 1 to 3 and Comparative Examples 1 to 3 were measured. FIGs. 19 to 21 and FIGs. 22 to 24 respectively illustrate the EDS spectra of Examples 1 to 3 and Comparative Examples 1 to 3. As illustrated in FIGs. 19 to 21, in the LATP crystal particles of Examples 1 to 3, an element other than the elements constituting the LATP crystals is not detected. As illustrated in FIG. 22, in the LATP crystal particles of Comparative Example 1, in addition to the elements constituting the LATP crystals, Ca is detected. As illustrated in FIGs. 23 and 24, in the LATP crystal particles of Comparative Examples 2 and 3, in addition to the elements constituting the LATP crystals, Zn is detected.

Although the present disclosure has been described based on the drawings and the embodiment, it is to be noted that a variety of changes and modifications may be made by a person skilled in the art. It is therefore to be noted that these changes and modifications are included in the scope of the present disclosure.

## Claims

1. A method of producing a LTP or LATP crystal particle, the method comprising:
preparing glass containing,
in molar ratio,
1 + x of Li₂O, where 0 ≤ x ≤ 1,
x of Al₂O₃,
4 - 2x of TiO₂,
3 + y of P₂O₅, where 1 ≤ y ≤ 4, and
from more than y to less than 3y of ZnO;
subjecting, after the preparation of glass, the glass to thermal treatment for crystallization; and
selectively eluting a substance other than a LTP or LATP crystal through acid treatment.

2. The method of producing according to claim 1, wherein
the molar ratio of ZnO, in materials of the glass, ranges from more than y to 2y or less.

## Patentansprüche

1. Verfahren zur Herstellung eines LTP- oder LATP-Kristallteilchens, wobei das Verfahren Folgendes umfasst:
Herstellung von Glas das Folgendes umfasst,
im Molverhältnis,
1 + x von Li₂O, wobei 0 ≤ x ≤ 1,
x von Al₂O₃,
4 - 2x von TiO₂,
3 + y von P₂O₅, wobei 1 ≤ y ≤ 4 und
von mehr als y bis weniger als 3 y ZnO;
Unterziehen des Glases, nach der Herstellung des Glases, einer thermischen Behandlung zur Kristallisation; und
selektives Eluieren einer anderen Substanz als eines LTP- oder LATP-Kristalls durch Säurebehandlung.

2. Verfahren zur Herstellung nach Anspruch 1, wobei das Molverhältnis von ZnO in Materialien des Glases im Bereich von mehr als y bis 2 y oder weniger liegt.

## Revendications

1. Procédé de production d'une particule de cristal de LTP ou de LATP, le procédé comprenant :
la préparation d'un verre contenant,
selon un rapport molaire,
1 + x de Li₂O, où 0 ≤ x ≤ 1,
X de Al₂O₃,
4 - 2x de TiO₂,
3 + y de P₂O₅, où 1 ≤y ≤ 4, et
de plus de y à moins de 3y de ZnO ;
la soumission, après la préparation du verre, du verre à un traitement thermique pour la cristallisation ; et
l'élution sélective d'une substance autre qu'un cristal de LTP ou de LATP par un traitement à l'acide.

2. Procédé de production selon la revendication 1, dans lequel le rapport molaire du ZnO, dans les matériaux du verre, va de plus y à 2y ou moins.
